# EUROPÄISCHE PATENTSCHRIFT

(11) **EP 3 140 095 B1**
(45) Veröffentlichungstag und Bekanntmachung des Hinweises auf die Patenterteilung: **31.01.2018**
(21) Anmeldenummer: 14733973.3
(22) Anmeldetag: 06.05.2014
(51) Int. Cl.: B29C 33/40, B29C 70/44, B29C 70/54, B29C 43/12

(54) **SEGMENTIERTE VAKUUMHAUBE**
SEGMENTED VACUUM HOOD
COUVERCLE À VIDE SEGMENTÉ

(43) Veröffentlichungstag der Anmeldung: 15.03.2017
(73) Patentinhaber: Piekenbrink Composite GmbH, 88471 Laupheim (DE)
(72) Erfinder: PIEKENBRINK, Björn, 88471 Laupheim (DE); PIEKENBRINK, Olaf, 88471 Laupheim (DE); ÜBERLE, Stefan, 88416-Steinhausen (DE)
(74) Vertreter: Kiessling, Christian
(86) Internationale Anmeldenummer: PCT/DE2014/100157
(87) Internationale Veröffentlichungsnummer: WO 2015/169272

(56) Entgegenhaltungen:
- EP-A1- 2 134 523
- WO-A1-2012/062237
- FR-A1- 2 943 271
- US-A- 5 015 168
- US-B1- 6 551 091
- COOKE M: "IT'S IN THE BAG", ENGINEERING. (INCL. MACHINE SHOP MAGAZINE), ENGINEERING DESIGN COUNCIL. LONDON, GB, Bd. 232, Nr. 2, 3. Februar 1992 (1992-02-03), Seiten 10-11, XP000294565, ISSN: 0013-7782

## Beschreibung

Die Erfindung betrifft eine Formkörper-Vorrichtung zur Aufnahme eines mittels einer Vakuumhaube zum gasdichten Abdecken eines mittels Gasdruck bewirkten Verpressens zu erstellenden Werkstücks enthaltend ein aushärtbares viskoses Füllmaterial, wobei die in der Formkörper-Vorrichtung enthaltene Vakuumhaube aus einem elastischen Kunststoffmaterial hergestellt ist und in einem peripheren Bereich einen einstückig mit der Vakuumhaube ausgebildeten Dichtkeil enthält, der während eines Verpressens des Werkstückes in eine in einem peripheren Bereich des Formkörpers ausgebildete Dichtnut gasdicht eingreift.

Formkörper-Vorrichtungen der eingangs genannten Art werden im Stand der Technik unter anderem verwendet, um Werkstücke zu erstellen, indem ein aushärtbarer Rohling in einen formgebenden Formkörper eingebracht wird und anschließend mit Hilfe einer über dem Rohling zu platzierenden Vakuumhaube in Richtung des Formkörpers gedrückt wird.

Die im Zusammenhang mit den bekannten Formkörper-Vorrichtungen verwendeten Vakuumhauben sind in der Regel aus einem elastischen Kunststoffmaterial hergestellt und enthalten in einem peripheren Bereich einen einstückig mit der Vakuumhaube ausgebildeten Dichtkeil, der während eines Verpressens eines oft Schichten aus aushärtbarem Kompositsubstrat enthaltenden Werkstückes in eine in einem peripheren Bereich des Formkörpers ausgebildete Dichtnut gasdicht eingreift. In den Patentanmeldungen mit den Nummern WO2012062237 Al und EP 2134523 sind bekannte Vakuumhauben offenbart. Insbesondere bei Verwendung von mit einer Dichtnut versehenen Vakuumhauben ist eine quasi 100% wirksame Dichtung zwischen Werkstückoberfläche und Umgebungsatmosphäre mittels zweier unabhängiger Vakuumkreise für Dichtnut und Werkstück-Oberfläche zu verzeichnen. Dadurch ist eine Abdeckeinheit geschaffen, die passgenau auf das Oberflächenprofil eines aus dem Kompositsubstrat herzustellenden Werkstückes gefertigt werden kann, wobei alle Konturenbereiche des Werkstücks während eines Verpressungsvorgangs einerseits gleichmäßig mit einem Überdruck und andererseits gleichmäßig mit Unterdruck beaufschlagt werden können.

Bei Einsatz derartiger Vakuumhauben im Zusammenhang mit Formkörper-Vorrichtungen werden insbesondere die bei den zuvor zum Einsatz gekommenen Dichtungsfolien häufig auftretenden Druck-, Zug- und Spannungsbelastungen vermieden, so dass eine lokale Herabsetzung eines Verpressungsdruckes und damit verbundene Harzansammlungen vermieden wird.

Des Weiteren sind die im Zusammenhang mit den bekannten Formkörper-Vorrichtungen eingesetzten Vakuumhauben so robust, dass sie für eine Mehrzahl von Anwendungen geeignet sind. Bei ihrem Einsatz werden Arbeitsaufwand und Abfallmenge gegenüber den zuvor zur Vakuumverpressung aushärtbarer Werkstücke eingesetzten Mitteln reduziert. Gleichzeitig ist eine Qualitätssicherung der erstellten Werkstücke durch eine zeitlich konstante Vakuumwirkung zu verzeichnen.

Die bekannten Formkörper-Vorrichtungen weisen indes den Nachteil auf, dass bei sehr großflächigen Werkstücken eine Verwendung entsprechend großer Vakuumhauben notwendig wird, deren Fertigung, Handhabung und Einsatz bei einer Werkstück-Erstellung aufgrund ihrer Größe problematisch ist. Darüber hinaus ist ein entsprechendes Ausfallsrisiko erheblich, da bei auftretenden Fehlstellen die wegen ihrer Größe entsprechend teuren Vakuumhauben verlustig gehen.

Aufgabe der Erfindung ist es deshalb, eine Formkörper-Vorrichtung zu schaffen, bei der große Werkstücke ohne den Einsatz entsprechend großer Vakuumhauben gefertigt werden können.

Für eine Formkörper-Vorrichtung der eingangs genannten Art wird diese Aufgabe erfindungsgemäß dadurch gelöst, dass der Formkörper an eine über Teilbereiche des Werkstücks geführte Brücke angrenzt, und der betreffende Teil der in sich geschlossen ausgebildeten Dichtnut in der mindestens einen Brücke ausgebildet ist.

Bevorzugte Ausführungsformen der Erfindung sind Gegenstand der Unteransprüche.

Bei der erfindungsgemäßen Formkörper-Vorrichtung ist aufgrund der Merkmalskombination, dass der Formkörper an eine über Teilbereiche des Werkstücks geführte Brücke angrenzt, und der betreffende Teil der in sich geschlossen ausgebildeten Dichtnut in der mindestens einen Brücke ausgebildet ist, sichergestellt, dass anstelle einer großen Vakuumhaube eine Mehrzahl kleinerer und entsprechend besser handhabbarer Vakuumhauben ohne Qualitätseinbußen bei einer Herstellung von Werkstücken zum Einsatz kommen kann.

In diesem Zusammenhang sei angeführt, dass eine simple Aggregation kleinerer Vakuumhauben hintereinander nicht zielführend wäre, da dabei Zwischenräume zwischen den Umlaufnuten zweier benachbarter Vakuumhauben entstünden, in denen ein geminderter und somit in vielen Anwendungsfällen nicht ausreichender Anpressdruck auf das Werkstück ausgeübt wird. Eine über die gesamte Oberfläche des Werkstücks konstante Druckausübung von Seiten der Vakuumhauben wäre a priori ausgeschlossen.

Erfindungsgemäß wird ein derartiger Nachteil umgangen, indem die betreffenden aneinander angrenzenden benachbarten Umlaufnute zweier aneinander angrenzender Vakuumhauben mittels einer Brücke in eine Ebene oberhalb der Oberfläche eines zu erstellenden Werkstückes verlagert werden, wobei unterhalb eines Brückenbogens die beiden benachbarten Vakuumhauben direkt aneinander angrenzen, so dass eine entsprechende Druckbeaufschlagung eines Werkstückes auch direkt unterhalb eines Brückenbogens gegeben ist.

Gemäß einer ersten bevorzugten Ausführungsform der erfindungsgemäßen Formkörper-Vorrichtung ist vorgesehen, dass die Dichtnut im Bereich einer seitlichen Flanke eines Brückenbogens einer Brücke geführt ist.

Gemäß einer wichtigen bevorzugten Ausführungsform der erfindungsgemäßen Formkörper-Vorrichtung ist der Formkörper in eine Mehrzahl von Segmenten unterteilt und enthält eine Mehrzahl über unterschiedliche Segmente des Formkörpers geführte Brücken, wobei jede Brücke an ein zugeordnetes separates Segment des Formkörpers angrenzt und jeweils ein Segment und eine Brücke eine von einer Vakuumhaube abzudeckende Einheit mit einer in sich geschlossen ausgebildeten Dichtnut bilden.

Die Brücken sind insbesondere bei der Herstellung langschmaler Werkstücke vorzugsweise parallel zueinander ausgerichtet und dabei über sukzessiv aneinander angrenzende Segmente des Werkstückes geführt.

Gemäß einer anderen wichtigen bevorzugten Ausführungsform der erfindungsgemäßen Formkörper-Vorrichtung ist vorgesehen, dass bei einer zwischen zwei aneinander angrenzenden Segmenten des Formkörpers angeordnete Brücke die Dichtnut eines ersten Formkörper-Segmentes im Bereich einer ersten Flanke der Brücke angeordnet ist und die Dichtnut des dem ersten Formkörper-Segment benachbarten zweiten Formkörper-Segmentes im Bereich einer der ersten Flanke gegenüberliegenden zweiten Flanke der Brücke angeordnet ist.

Vorzugsweise ist zwischen dem Formkörper und einer Brücke ein gebogener Übergangsbereich ausgebildet, in dem ein entsprechender Bereich der Dichtnut geführt ist, wobei der Übergangsbereich kritischerweise mit einem an die Elastizität des in die Dichtnut einzubringenden Dichtkeils angepassten Krümmungsradius versehen ist.

Eine Brücke der erfindungsgemäßen Formkörper-Vorrichtung kann einstückig mit dem Formkörper ausgebildet sein oder alternativ als separates Bauteil aus einem formstabilen Material ausgebildet sein und dabei fest mit dem Formkörper verbindbar sein.

Bezüglich der Formgebung der Brücke hat sich ein im Querschnitt rechteckig ausgebildeter oder ein im Querschnitt keilförmig ausgebildeter Brückenbogen bewährt.

Des Weiteren kann zwischen einem Brückenbogen einer Brücke und dem Formkörper ein offener Bereich ausgebildet sein, oder alternativ kann der Bereich zwischen einem Brückenbogen einer Brücke und dem Formkörper von einem Steg geschlossen sein.

Die erfindungsgemäße Formkörper-Vorrichtung wird im Folgenden anhand einer bevorzugten Ausführungsform erläutert, die in den Figuren der Zeichnung dargestellt ist. Darin zeigen:
- Fig.1: eine erste bevorzugte Ausführungsform der erfindungsgemäßen Formkörper-Vorrichtung in einer Ansicht von schräg oben;
- Fig.2: die in Figur 1 dargestellte bevorzugte Ausführungsform der erfindungsgemäßen Formkörper-Vorrichtung in einer Ansicht von schräg oben;
- Fig.3: die in Figur 1 dargestellte bevorzugte Ausführungsform der erfindungsgemäßen Formkörper-Vorrichtung in einer Ansicht von schräg oben;
- Fig. 4: die in Figur 1 dargestellte bevorzugte Ausführungsform der erfindungsgemäßen Formkörper-Vorrichtung in einer Querschnittsansicht;
- Fig. 5: die in Figur 1 dargestellte weiter bevorzugte Ausführungsform der erfindungsgemäßen Formkörper-Vorrichtung in einer Querschnittsansicht;
- Fig. 6: die in Figur 1 dargestellte bevorzugte Ausführungsform der erfindungsgemäßen Formkörper-Vorrichtung in einer Ansicht von schräg oben.

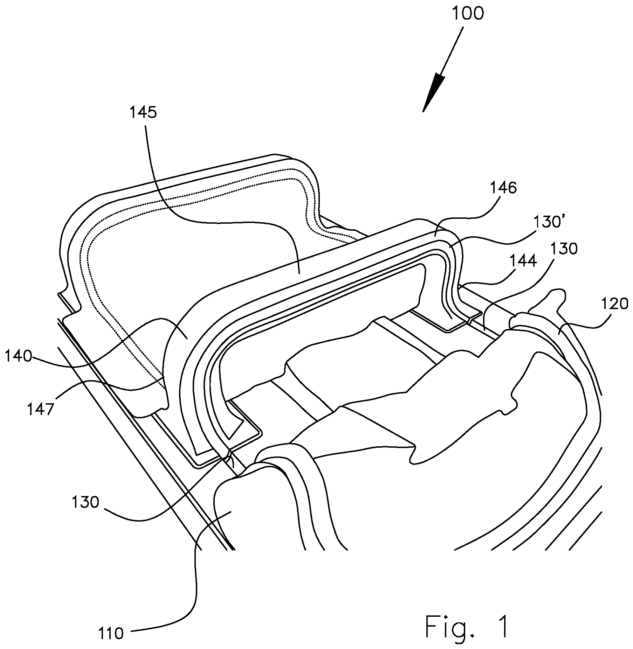

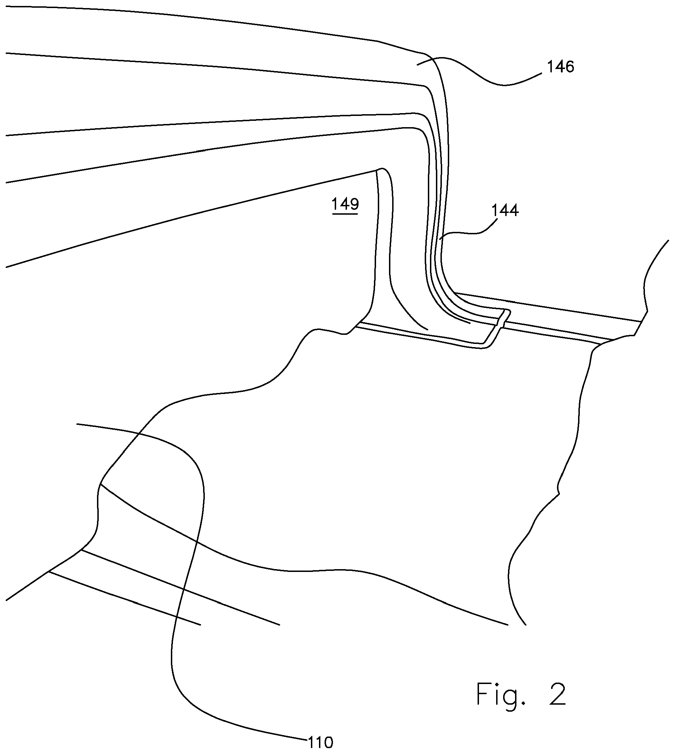

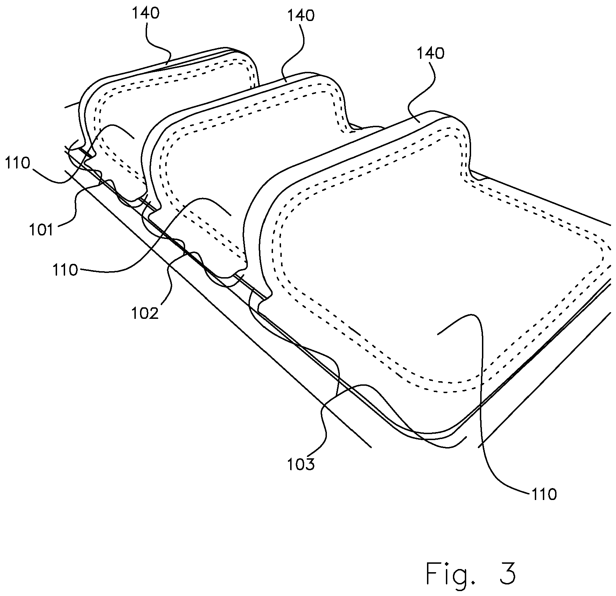

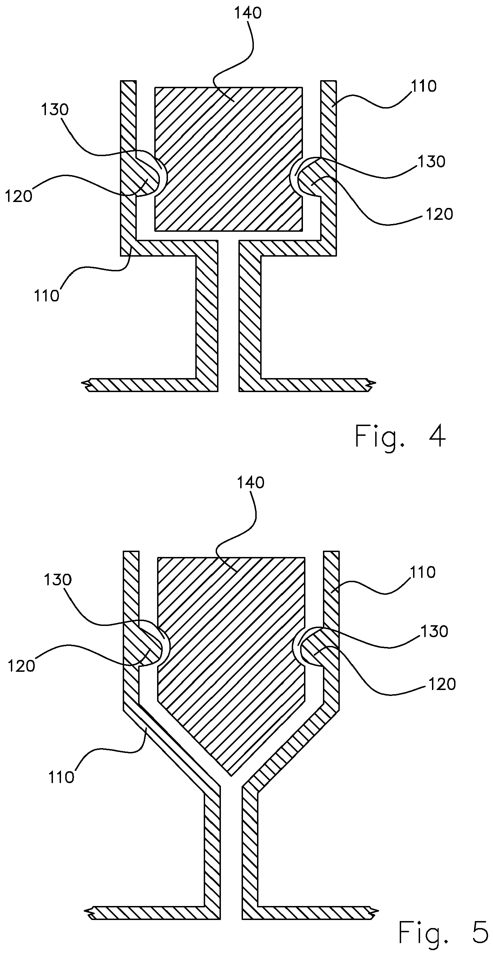

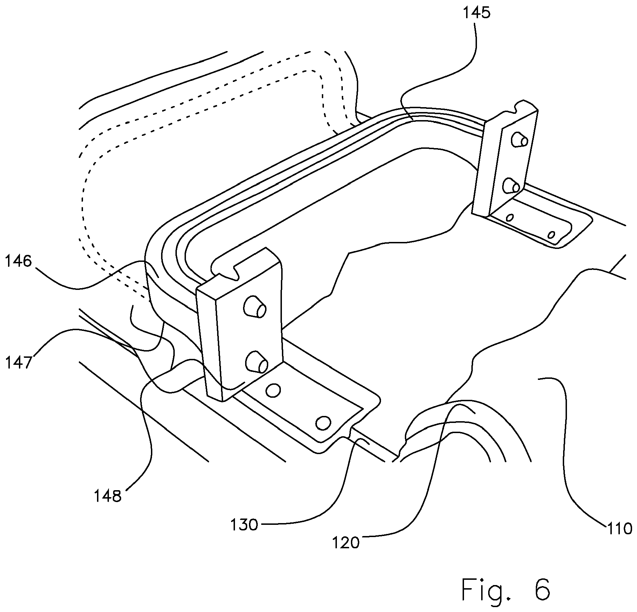

Die in den Figuren 1 bis 6 dargestellte erfindungsgemäße Formkörper-Vorrichtung 100 ist zur Aufnahme eines mittels einer Vakuumhaube 110 zum gasdichten Abdecken eines mittels Gasdruck bewirkten Verpressens zu erstellenden Werkstücks vorgesehen, wobei das Werkstück in der Regel ein aushärtbares viskoses Füllmaterial enthält.

Die im Zusammenhang mit der dargestellten erfindungsgemäßen Formkörper-Vorrichtung 100 verwendete Vakuumhaube 110 ist dabei aus einem elastischen Kunststoffmaterial hergestellt und ist in einem peripheren Bereich mit einem einstückig mit der Vakuumhaube 110 ausgebildeten Dichtkeil 120 versehen, der während eines Verpressens des Werkstückes in eine in einem peripheren Bereich des Formkörpers ausgebildete Dichtnut 130 gasdicht eingreift.

Der Formkörper grenzt an eine über Teilbereiche des Werkstücks geführte Brücke 140 an, wobei der betreffende über das Werkstück geführte Teil des Dichtkeils 120 in einer in der Brücke 140 ausgebildeten Dichtnut 130 geführt ist, und wobei die in der Brücke 140 ausgebildete Dichtnut 130' einen Teil einer insgesamt in sich geschlossen ausgebildeten Dichtnut 130 darstellt. Die Dichtnut ist dabei im Bereich einer seitlichen Flanke eines Brückenbogens einer Brücke geführt.

Der Formkörper ist in eine Mehrzahl von Segmenten 101, 102, 103 unterteilt und enthält eine Mehrzahl über unterschiedliche Segmente 101, 102, 103 des Formkörpers geführte Brücken 140, wobei jede Brücke 140 an ein zugeordnetes separates Segment 101, 102, 103 des Formkörpers angrenzt und jeweils ein Segment 101, 102, 103 und eine Brücke 140 eine von einer Vakuumhaube 110 abzudeckende Einheit mit einer in sich geschlossen ausgebildeten Dichtnut 130 bilden.

Die Brücken 140 sind parallel zueinander ausgerichtet und über sukzessiv aneinander angrenzende Segmente 101, 102, 103 des Werkstückes geführt.

Bei einer zwischen zwei aneinander angrenzende Segmente 101, 102, 103 des Formkörpers angeordneten Brücke 140 ist die Dichtnut 130 eines ersten Formkörper-Segmentes 101 im Bereich einer ersten Flanke der Brücke angeordnet und die Dichtnut des dem ersten Formkörper-Segment benachbarten zweiten Formkörper-Segmentes ist im Bereich einer der ersten Flanke gegenüberliegenden zweiten Flanke der Brücke angeordnet.

Zwischen dem Formkörper und einer Brücke ist ein gebogener Übergangsbereich ausgebildet, in dem ein entsprechender Bereich der Dichtnut geführt ist. Der Übergangsbereich ist dabei mit einem an die Elastizität des in die Dichtnut einzubringenden Dichtkeils angepassten Krümmungsradius versehen.

In dem dargestellten Ausführungsbeispiel ist eine Brücke als separates Bauteil aus einem formstabilen Material ausgebildet und fest mit dem Formkörper verbindbar.

Des Weiteren ist in dem dargestellten Ausführungsbeispiel, ein Brückenbogen im Querschnitt rechteckig ausgebildet.

Zwischen einem Brückenbogen einer Brücke und dem Formkörper ist ein offener Bereich ausgebildet, innerhalb dessen das Material zweier aneinander angrenzender Vakuumhauben zu liegen kommt.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Formkörper-Vorrichtung (100) zur Aufnahme eines mittels einer Vakuumhaube zum gasdichten Abdecken eines mittels Gasdruck bewirkten Verpressens zu erstellenden Werkstücks enthaltend ein aushärtbares viskoses Füllmaterial, wobei die in der Formkörper-Vorrichtung enthaltene Vakuumhaube (110) aus einem elastischen Kunststoffmaterial hergestellt ist und in einem peripheren Bereich einen einstückig mit der Vakuumhaube ausgebildeten Dichtkeil (120) enthält, der während eines Verpressens des Werkstückes in eine in einem peripheren Bereich des Formkörpers ausgebildete Dichtnut (130) gasdicht eingreift, **dadurch gekennzeichnet, dass** der Formkörper an eine über Teilbereiche des Werkstücks geführte Brücke (140) angrenzt, und der betreffende Teil (130') der in sich geschlossen ausgebildeten Dichtnut in der mindestens einen Brücke (140) ausgebildet ist.

2. Formkörper-Vorrichtung nach Anspruch 1, **dadurch gekennzeichnet, dass** die Dichtnut im Bereich einer seitlichen Flanke (146, 147) eines Brückenbogens (145) einer Brücke geführt ist.

3. Formkörper-Vorrichtung nach einem der vorhergehenden Ansprüche, **dadurch gekennzeichnet, dass** der Formkörper in eine Mehrzahl von Segmenten (101, 102, 103) unterteilt ist und eine Mehrzahl über unterschiedliche Segmente des Formkörpers geführte Brücken enthält, wobei jede Brücke an ein zugeordnetes separates Segment des Formkörpers angrenzt und jeweils ein Segment und eine Brücke eine von einer Vakuumhaube abzudeckende Einheit mit einer in sich geschlossen ausgebildeten Dichtnut bildet.

4. Formkörper-Vorrichtung nach Anspruch 3, **dadurch gekennzeichnet, dass** die Brücken parallel zueinander ausgerichtet sind und über sukzessiv aneinander angrenzende Segmente des Werkstückes geführt sind.

5. Formkörper-Vorrichtung nach Anspruch 4, **dadurch gekennzeichnet, dass** bei einer zwischen zwei aneinander angrenzende Segmente des Formkörpers angeordneten Brücke die Dichtnut eines ersten Formkörper-Segmentes im Bereich einer ersten Flanke der Brücke angeordnet ist und die Dichtnut des dem ersten Formkörper-Segment benachbarten zweiten Formkörper-Segmentes im Bereich einer der ersten Flanke gegenüberliegenden zweiten Flanke der Brücke angeordnet ist.

6. Formkörper-Vorrichtung nach einem der vorhergehenden Ansprüche, **dadurch gekennzeichnet, dass** zwischen dem Formkörper und einer Brücke ein gebogener Übergangsbereich (144) ausgebildet ist, in dem ein entsprechender Bereich der Dichtnut geführt ist.

7. Formkörper-Vorrichtung nach Anspruch 6, **dadurch gekennzeichnet, dass** der Übergangsbereich mit einem an die Elastizität des in die Dichtnut (130, 130') einzubringenden Dichtkeils (120) angepassten Krümmungsradius versehen ist.

8. Formkörper-Vorrichtung nach einem der Ansprüche 1 bis 7, **dadurch gekennzeichnet, dass** eine Brücke einstückig mit dem Formkörper ausgebildet ist.

9. Formkörper-Vorrichtung nach einem der Ansprüche 1 bis 7, **dadurch gekennzeichnet, dass** eine Brücke als separates Bauteil (140') aus einem formstabilen Material ausgebildet ist und fest mit dem Formkörper verbindbar ist.

10. Formkörper-Vorrichtung nach einem der Ansprüche 2 bis 9, **dadurch gekennzeichnet, dass** ein Brückenbogen im Querschnitt rechteckig ausgebildet ist.

11. Formkörper-Vorrichtung nach einem der Ansprüche 2 bis 9, **dadurch gekennzeichnet, dass** ein Brückenbogen im Querschnitt keilförmig ausgebildet ist.

12. Formkörper-Vorrichtung nach einem der Ansprüche 2 bis 11, **dadurch gekennzeichnet, dass** zwischen einem Brückenbogen einer Brücke und dem Formkörper ein offener Bereich (149) ausgebildet ist.

13. Formkörper-Vorrichtung nach einem der Ansprüche 2 bis 11, **dadurch gekennzeichnet, dass** der Bereich zwischen einem Brückenbogen einer Brücke und dem Formkörper von einem Steg geschlossen ist.

## Claims

1. Moulded body device (100) for receiving a workpiece to be provided by means of a vacuum hood for covering a compression process produced using gas pressure in a gas-tight manner, the said workpiece containing a curable viscous filler material, the vacuum hood (110) contained in the moulded body device being produced from an elastic plastic material and, in a peripheral region, containing a sealing wedge (120) which is formed in one piece with the vacuum hood and, during compression of the workplace, engaging in a gas-tight manner in a sealing groove (130) formed in a peripheral region of the moulded body, **characterized in that** the moulded body adjoins a bridge (140) guided over sub-regions of the workpiece, and the relevant part (130') of the intrinsically closed sealing groove is formed in the at least one bridge (140).

2. Moulded body device according to Claim 1, **characterized in that** the sealing groove is guided in the region of a lateral flank (146, 147) of a bridge arch (145) of a bridge.

3. Moulded body device according to one of the preceding claims, **characterized in that** the moulded body is subdivided into a plurality of segments (101, 102, 103) and contains a plurality of bridges guided over different segments of the moulded body, wherein each bridge adjoins an associated separate segment of the moulded body, and in each case a segment and a bridge form a unit to be covered by a vacuum hood and having an intrinsically closed sealing groove.

4. Moulded body device according to Claim 3, **characterized in that** the bridges are aligned parallel to one another and are guided over successively mutually adjoining segments of the workpiece.

5. Moulded body device according to Claim 4, **characterized in that**, in a bridge arranged between two mutually adjoining segments of the moulded body, the sealing groove of a first moulded body segment is arranged in the region of a first flank of the bridge, and the sealing groove of the second moulded body segment adjacent to the first moulded body segment is arranged in the region of a second flank of the bridge opposite the first flank.

6. Moulded body device according to one of the preceding claims, **characterized in that** a curved transition region (144), in which a corresponding region of the sealing groove is guided, is formed between the moulded body and a bridge.

7. Moulded body device according to Claim 6, **characterized in that** the transition region is provided with a radius of curvature matched to the elasticity of the sealing wedge (120) to be introduced into the sealing groove (130, 130').

8. Moulded body device according to one of Claims 1 to 7, **characterized in that** a bridge is formed in one piece with the moulded body.

9. Moulded body device according to one of Claims 1 to 7, **characterized in that** a bridge is formed as a separate component (140') of a dimensionally stable material and can be connected firmly to the moulded body.

10. Moulded body device according to one of Claims 2 to 9, **characterized in that** a bridge arch is formed so as to be rectangular in cross section.

11. Moulded body device according to one of Claims 2 to 9, **characterized in that** a bridge arch is formed so as to be wedge-shaped in cross section.

12. Moulded body device according to one of Claims 2 to 11, **characterized in that** an open region (149) is formed between a bridge arch of a bridge and the moulded body.

13. Moulded body device according to one of Claims 2 to 11, **characterized in that** the region between a bridge arch of a bridge and the moulded body is closed by a web.

## Revendications

1. Dispositif de corps moulé (100) destiné à la réception d'une pièce devant être générée au moyen d'une compression engendrée par pression de gaz au moyen d'un capot sous vide destiné à un recouvrement étanche aux gaz, comportant un matériau de remplissage visqueux durcissable, cependant que le capot sous vide (110) compris dans le dispositif de corps moulé est fabriqué à partir d'un matériau élastique en matière plastique et comporte, dans une zone périphérique, un coin d'étanchéité (120) qui est réalisé en un seul tenant avec le capot sous vide et qui, durant une compression de la pièce, s'engrène de façon étanche au gaz dans une rainure d'étanchéité (130) réalisée dans une zone périphérique du corps moulé, **caractérisé en ce que** le corps moulé est adjacent à un pont (140) agencé par-dessus des zones partielles de la pièce, et **en ce que** la partie concernée (130') de la rainure d'étanchéité réalisée de façon fermée sur elle-même est réalisée dans le au moins un pont (140).

2. Dispositif de corps moulé selon la revendication 1, **caractérisé en ce que** la rainure d'étanchéité est agencée dans la zone d'un flanc latéral (146, 147) d'un arc de pont (145).

3. Dispositif de corps moulé selon une des revendications précédentes, **caractérisé en ce que** le corps moulé est subdivisé en une pluralité de segments (101, 102, 103) et comporte une pluralité de ponts agencés par-dessus différents segments du corps moulé, cependant que chaque pont est adjacent à un segment distinct associé du corps moulé et que respectivement un segment et un pont constitue une unité, devant être recouverte par un capot sous vide, avec une rainure d'étanchéité réalisée de façon fermée sur elle-même.

4. Dispositif de corps moulé selon la revendication 3, **caractérisé en ce que** les ponts sont orientés parallèlement les uns aux autres et sont agencés par-dessus des segments de la pièce qui sont successivement adjacents les uns aux autres.

5. Dispositif de corps moulé selon la revendication 4, **caractérisé en ce que**, dans le cas d'un pont disposé entre deux segments du corps moulé successivement adjacents l'un à l'autre, la rainure d'étanchéité d'un premier segment du corps moulé est disposée dans la zone d'un premier flanc du pont, et la rainure d'étanchéité du deuxième segment du corps moulé avoisinant au premier segment du corps moulé est disposée dans la zone d'un deuxième flanc du pont faisant face au premier flanc.

6. Dispositif de corps moulé selon une des revendications précédentes, **caractérisé en ce que**, entre le corps moulé et un pont, une zone transitoire (144) courbée est réalisée, dans laquelle une zone correspondante de la rainure d'étanchéité est agencée.

7. Dispositif de corps moulé selon la revendication 6, **caractérisé en ce que** la zone transitoire est dotée d'un rayon de courbure adapté à l'élasticité du coin d'étanchéité (120) devant être inséré dans la rainure d'étanchéité (130, 130').

8. Dispositif de corps moulé selon une des revendications de 1 à 7, **caractérisé en ce qu'**un pont est réalisé en un seul tenant avec le corps moulé.

9. Dispositif de corps moulé selon une des revendications de 1 à 7, **caractérisé en ce qu'**un pont est réalisé en tant que composant (140') distinct à partir d'un matériau stable en dimensions et peut être relié à demeure au corps moulé.

10. Dispositif de corps moulé selon une des revendications de 2 à 9, **caractérisé en ce qu'**un arc de pont est réalisé sous forme rectangulaire en section transversale.

11. Dispositif de corps moulé selon une des revendications de 2 à 9, **caractérisé en ce qu'**un arc de pont est réalisé sous forme kunéiforme en section transversale.

12. Dispositif de corps moulé selon une des revendications de 2 à 11, **caractérisé en ce que**, entre un arc de pont d'un pont et le corps moulé, une zone ouverte (149) est réalisée.

13. Dispositif de corps moulé selon une des revendications de 2 à 11, **caractérisé en ce que** la zone comprise entre un arc de pont d'un pont et le corps moulé est fermée par une traverse.
